# EUROPÄISCHE PATENTSCHRIFT

(11) **EP 0 614 205 B1**
(45) Veröffentlichungstag und Bekanntmachung des Hinweises auf die Patenterteilung: **16.07.1997**
(21) Anmeldenummer: 94102646.0
(22) Anmeldetag: 22.02.1994
(51) Int. Cl.: H01H 21/82

(54) **Elektrischer Positionsschalter**
Electrical position switch
Contacteur électrique de position

(30) Priorität: 27.02.1993 DE 4306189; 13.10.1993 DE 4334912
(43) Veröffentlichungstag der Anmeldung: 07.09.1994
(73) Patentinhaber: Leopold Kostal GmbH & Co. KG, 58507 Lüdenscheid (DE)
(72) Erfinder: Sturges, Jörg, D-58566 Klerspe (DE); Knobloch, Rüdiger, D-58509 Lüdenscheid (DE)

(56) Entgegenhaltungen:
- DE-B- 2 340 135
- DE-U- 9 200 416
- FR-A- 2 517 110
- GB-A- 2 135 126
- US-A- 3 637 962

## Beschreibung

Die vorliegende Erfindung bezieht sich auf einen entsprechend dem Oberbegriff des Hauptanspruches konzipierten, für automatische Schaltgetriebe von Kraftfahrzeugen vorgesehenen elektrischen Positionsschalter.

Derartige Schaltvorichtungen sind dafür vorgesehen, um in den einzelnen mittels Wahlhebel manuell einstellbaren Schaltstellungen des automatisch arbeitenden Schaltgetriebes bestimmte Funktionen zu initiieren bzw. freizugeben oder zu verhindern. So muß sichergestellt sein, daß ein Kraftfahrzeug nur in der sogenannten Parkstellung "P" oder in der Neutralstellung "N" angelassen werden kann, d.h. in allen anderen Schaltstellungen muß dieser Vorgang unterbunden sein.

In der Konsequenz bedeutet dies, daß durch eine den jeweils bestehenden Anforderungen entsprechende Kodierung bestimmte Funktionen realisierbar bzw. blockierbar sind.

Ein solcher elektrischer Positionsschalter ist räumlich dem automatischen Schaltgetriebe des Kraftfahrzeuges zugeordnet, wobei durch die Betätigung desselben über eine Schaltwelle ein darauf befindliches, mit Schaltnocken versehenes Schaltrad verstellt wird. Durch diese Anordnung des Positionsschalters sind für die Konzeption desselben äußere Begrenzungen vorgegeben, mit denen Schwierigkeiten in der Ausführung des inneren Aufbaus verbunden sind und zwar deshalb, weil in der Regel die miteinander kooperierenden Kontaktelemente in axialer Richtung der Schaltwelle in mehreren Ebenen angeordnet sind.

Ein elektrischer Positionsschalter der eingangs erwähnten Art ist z.B. durch die DE-PS 23 40 135 bekanntgeworden. Bei dieser bekannten Ausführungsform besteht das Problem, daß dieselbe aus einer einen relativ hohen Aufwand erfordernden Vielzahl von auf den jeweiligen Anwendungsfall zugeschnittenen speziellen Einzelteilen besteht und somit nicht ohne weiteres an veränderlichen Schaltaufgaben anpaßbar ist. Darüber hinaus ist es schwierig, einen solchen Positionsschalter hinsichtlich seiner elektrischen Schaltpositionen auf die konkreten Schaltstellungen des Schaltbetriebes abzustimmen, was die Gefahr einer Fehlfunktion bzw. im Extremfall sogar eine Funktionsblockade des Schaltgetriebes und damit der Fahreigenschaft des Kraftfahrzeuges mit sich bringen kann.

Der vorliegenden Erfindung liegt die Aufgabe zugrunde, eine elektrische Schaltvorrichtung der eingangs erwähnten Art zu schaffen, bei der durch einen modularen, nur einen relativ geringen Aufwand erfordernden Aufbau und eine recht einfach durchzuführende Justierung auf die am Schaltgetriebe vorhandenen Verhältnisse unterschiedliche Schaltfunktionen in einwandfreier Art und Weise realisierbar sind.

Erfindungsgemäß wird die Aufgabe durch die im kennzeichnden Teil des Hauptanspruches angegebenen Merkmale gelöst. Bei einem solchen Aufbau ist besonders günstig, daß die Schaltvorgänge sehr exakt einstellbar und daß problemlos auch im nachhinein Anpassungen an sich verändernde Schaltaufgaben durchführbar sind.

Weitere vorteilhafte Ausgestaltungen des erfindungsgemäßen Gegenstandes sind in den Unteransprüchen angegeben und werden anhand von zwei in der Zeichnung dargestellten Ausführungsbeispielen näher erläutert. Dabei zeigt
- Fig. 1a: einen elektrischen Positionsschalter in Draufsicht ohne Deckelteil
- Fig. 1b: den Positionsschalter nach Fig. 1a mit Deckelteil im Schnitt gemäß Linie A-A der Fig. 1a
- Fig. 2a: eine am Sockelteil des Positionsschalters nach Fig. 1 zu befestigende Haltevorrichtung für die Anschlußkontaktelemente und die zugehörigen Schaltkontaktsysteme
- Fig. 2b: einen zur Aufnahme der Anschlußkontaktelemente vorgesehenen, in die Haltevorrichtung nach Fig. 2a zu integrierenden Tragekörper
- Fig. 3: ein Schaltbild des Positionsschalters nach Fig. 1, das eine in Kraftfahrzeugen übliche Funktionsweise einer solchen Schaltvorrichtung repräsentiert
- Fig. 4a: einen weiteren Positionsschalter in Draufsicht ohne Deckelteil
- Fig. 4b: den Positionsschalter nach Fig. 4a mit Deckelteil im Schnitt gemäß Linie A-A der Fig. 4a
- Fig. 5a: eine im Sockelteil des Positionsschalter nach Fig. 4 angeordnete Leiterplatte und einen damit kooperierenden, am Schaltrad befestigten Schaltarm
- Fig. 5b: den Schaltarm nach Fig. 5a im Schnitt gemäß Linie B-B der Fig. 5a
- Fig. 6: die den Schaltkontaktteilen des Positionsschalters nach Fig. 4 zugeordneten, im Tragekörper angeordneten Schaltstößel in vergrößerter Darstellung
- Fig. 7: ein Schaltbild des Positionsschalters nach Fig. 4, das eine vorteilhafte Funktionsweise einer solchen für Kraftfahrzeuge bestimmten Schaltvorrichtung repräsentiert.

In den Figuren sind gleichartige Teile mit gleichen Bezugszeichen versehen.

Wie aus der Zeichnung hervorgeht, weist ein elektrischer Positionsschalter ein relativ flach ausgebildetes Gehäuse 1 auf, das aus einem Sockelteil 1a und einem Deckelteil 1b besteht. Dabei ist das Sockelteil 1a aus formstabilem Kunststoff und zwar vorzugsweise aus Polyätherimid hergestellt, während das Deckelteil 1b aus Metall und zwar vorteilhafterweise aus Aluminium bzw. einer Aluminiumlegierung besteht.
Die beiden Teile des Gehäuses 1 sind unter Zwischenfügung eines in einer am Rand des Sockelteiles 1a vorhandenen umlaufenden Nut 2 gehaltenen Dichtrings 3 einander zugeordnet und über in am Rand des Sockelteils vorgesehene Durchbrüche 4a sowie damit fluchtende, ebenfalls am Rand des Deckelteils 1b vorgesehene Durchbrüche 4b eingreifende, der Einfachheit halber nicht dargestellte Schraubmittel miteinander verbunden.

Das grundsätzlich so aufgebaute Gehäuse 1 ist dem der Einfachheit halber nicht dargestellten Getriebekasten eines automatischen Schaltgetriebes von Kraftfahrzeugen zugeordnet.

Das Schaltgetriebe ist dabei so aufgebaut, daß eine vom Schalthebel desselben betätigte, aus dem Schaltgetriebe herausgeführte, ebenfalls der Einfachheit halber nicht dargestellte Schaltwelle in einen Durchbruch 6 des Positionsschalters eingreift, der sowohl im Sockelteil 1a als auch im Deckelteil 1b und in einem im Gehäuse 1 angeordneten Schaltrad 7 vorhanden ist. Dabei ist der in das Innere des Positionsschalters eingreifende Abschnitt der Schaltwelle dem Schaltrad 7 zugeordnet, welches auf einem Teil des Durchbruch-Umfangs mit einer Vielkeil-Verzahnung 7* und auf dem verbleibenden Teil des Durchbruch-Umfangs mit Kodierelementen 7** versehen ist, die mit komplementär ausgebildeten Abschnitten der Schaltwelle in Eingriff bringbar sind. Das Schaltrad 7 ist weiterhin auf einem Teil seines äußeren Umfangs mit Schaltnocken 7b aufweisenden Schaltkurvenbahnen 7a versehen. Diesen Schaltkurvenbahnen 7a sind über Schaltstößel 8 mehrere jeweils aus einem Festkontaktteil 9a und einem Schaltkontaktteil 9b bestehende Schaltkontaktsysteme zugeordnet. Die Schaltnocken sowie die Schaltstößel als auch die Festkontaktteile und die Schaltkontaktteile sind entsprechend den geforderten Funktionen ausgebildet und angeordnet bzw. einander zugeordnet.

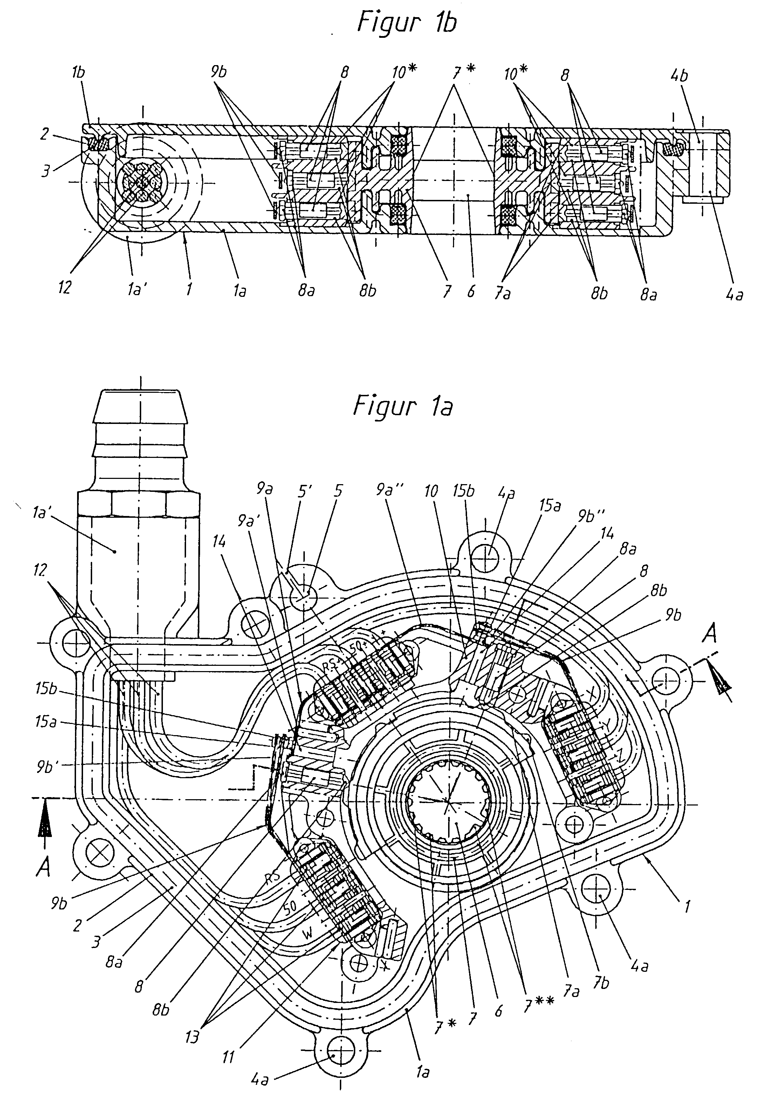

Bei dem Ausführungsbeispiel nach den Fig. 1 - 3 sind die Festkontaktteile 9a und die Schaltkontaktteile 9b an einer das Schaltrad 7 partiell umgebenden, im wesentlichen konzentrisch angeordneten, im Sockelteil 1a des Gehäuses befestigten U-förmigen Haltevorrichtung 10 in drei übereinander liegenden Ebenen E1,E2,E3 gehalten, wobei die Schaltstößel in dort vorhandenen Führungskanälen 10* angeordnet sind. In die Haltevorrichtung 10 sind weiterhin Tragekörper 11 eingesetzt, die zur Aufnahme von einerseits mit den Festkontaktteilen 9a und den Schaltkontaktteilen 9b verbundenen und andererseits an dem Gehäuse 1 von außen über einen Stutzen 1a' zugeführten elektrischen Leitern 12 z.B. durch Anwendung der Schneid-Klemm-Technik angeschlossenen Anschlußkontaktteilen 13 bestimmt sind. Diese mit Aufnahmekammern 13a für die Anschlußkontaktteile 13 versehenen Tragekörper 11 sind vorzugsweise gleich ausgebildet.Die Haltevorrichtung 10 ist vorteilhafterweise modular ausgeführt, so daß durch unterschiedliche Anordnung und Zuordnung der miteinander kooperierenden Bauteile ein in weiten Grenzen beliebiger Aufbau des Gehäuses 1 und auch andere Schaltfunktionen ohne weiteres realisierbar sind.

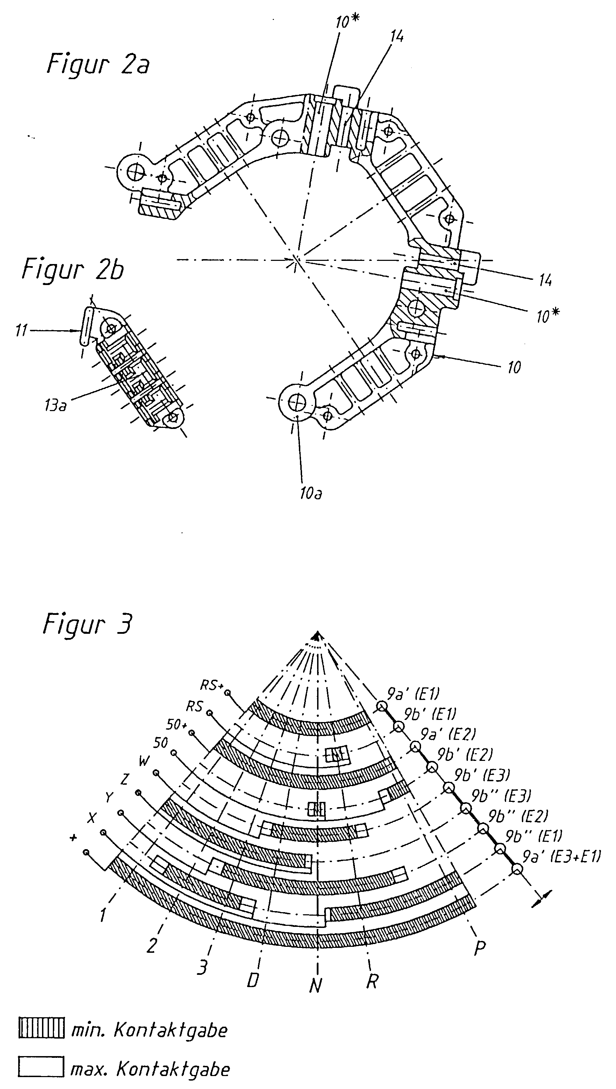

Da die Schaltfunktionen - wie aus Fig. 3 hervorgeht - eindeutig aufeinander abgestimmt sein müssen, ist jedem der Festkontaktteile 9a an ihren mit den freien Enden 9b',9b'' des zugeordneten Schaltkontaktteils 9b kooperierenden Enden 9a',9a" vorzugsweise jeweils ein aus einer der Einfachheit halber nicht dargestellten, in jeweils eine in der Haltevorrichtung 10 vorhandene Gewindebohrung 14 eingreifenden, auch der Einfachheit halber nicht dargestellten Einstellschraube bestehendes Justierorgan zugeordnet. Damit kann der Abstand des jeweils an den beiden freien Enden 9a',9a" des Festkontaktteils 9a vorhandenen Kontaktbelages 15a zu dem an dem jeweils zugeordneten freien Ende 9b',9b" des unter Vorspannung an dem damit kooperierenden Schaltstößel 8 anliegenden zugehörigen Schaltkontaktteils 9b vorhandenen Kontaktbelag 15b sehr feinfühlig eingestellt werden.

Bei dem Ausführungsbeispiel nach den Fig. 1 - 3 ist außerdem an dem Sockelteil 1a ein sowohl zur Befestigung als auch zum Abgleich auf die am Schaltgetriebe herrschenden Verhältnisse vorgesehenes Fixierauge 5 angeformt, über welches das Gehäuse 1 unter Zuhilfenahme eines in einen Schlitz 5' desselben eingreifenden, einer Justiereinrichtung zugehörigen, der Einfachheit halber nicht dargestellten Werkzeugs bei der Montage auf die vorhandene Relation zwischen den miteinander kooperierenden, eine komplexe Schaltanordnung bildenden Teilen des Schaltgetriebes und des Positionsschalters anpaßbar ist und am Getriebekasten des Schaltgetriebes festlegbar ist.

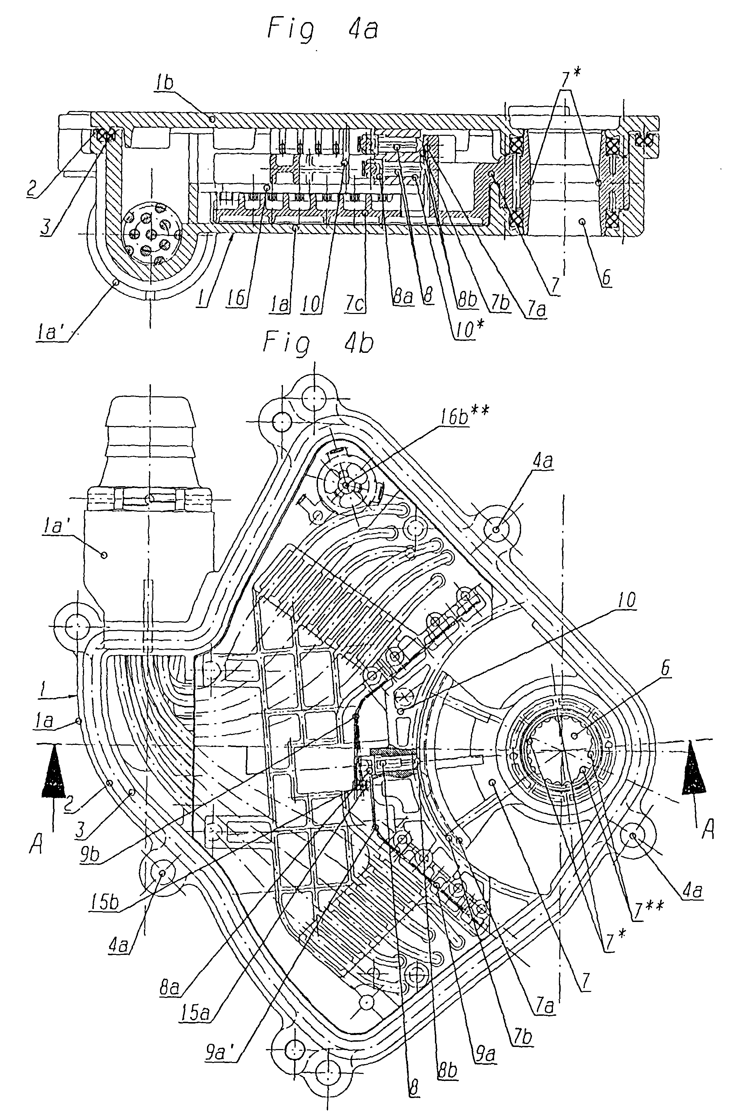

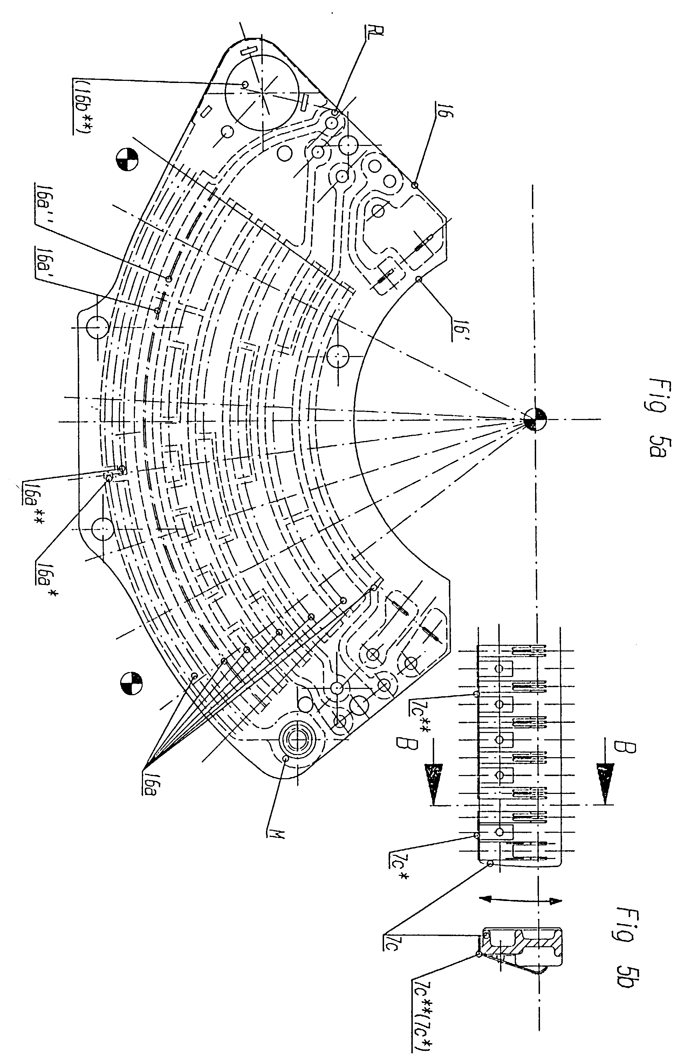

Bei dem in den Fig. 4 - 7 dargestellten Ausführungsbeispiel eines elektrischen Positionsschalters, der grundsätzlich den selben Aufbau wie das in den Fig. 1 - 3 dargestellte Ausführungsbeispiel aufweist, sind die Festkontaktteile 9a und die Schaltkontaktteile 9b als auch die zugeordneten Schaltstößel 8 an einer das Schaltrad 7 partiell umgebenden, im Sockelteil 1a befestigten Haltevorrichtung 10 in zwei übereinander liegenden Ebenen gehalten, wobei die Schaltstößel 8 in dort vorhandenen Führungskanälen 10* angeordnet sind.

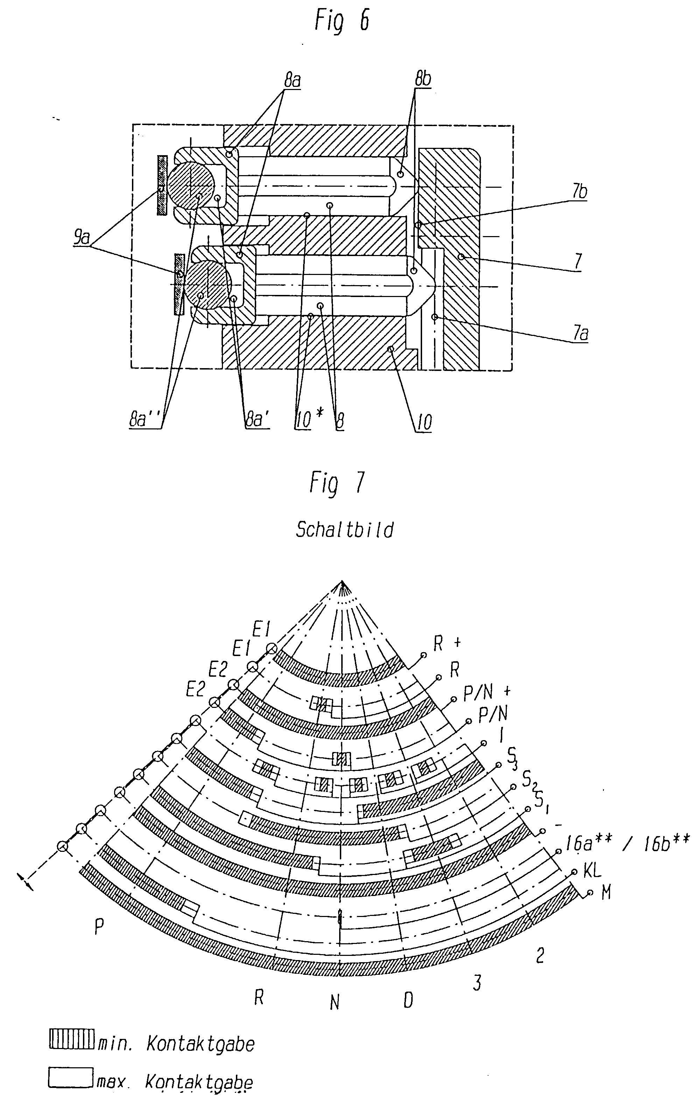

Da die Schaltfunktionen auch bei diesem Ausführungsbeispiel eindeutig aufeinander abgestimmt sein müssen (siehe Fig. 7), sind jedem Schaltstößel 8 an dessen den Schaltkontaktteilen 9b jeweils zugeordneten einen Ende 8a Justagemittel 8a',8a" zugeordnet (siehe insbesondere Fig. 6). Diese bestehen aus einer an dem einen Ende 8a des Schaltstößels 8 vorhandenen, als Sackloch-Bohrung ausgeführten Ausnehmung 8a' und einem darin unter Preßpassung gehaltenem, vorzugsweise als Kugel ausgeführten Bauelement 8a". Durch verschieden tiefes Eindrücken der Kugel in die Sackloch-Bohrung lassen sich sehr einfach Toleranzen der beteiligten Bauelemente - wie z.B. Dickenschwankungen der Kontaktteile und der zugehörigen Kontaktbeläge sowie Längenschwankungen der Schaltstößel und Höhenschwankungen der Schaltnocken - ausgleichen.

Zusätzlich zu den vorbeschriebenen mehr oder minder leistungsbehafteten Schaltkontaktsystemen ist bei dem Ausführungsbeispiel nach den Fig. 4 - 7 eine mit Leiterbahnen 16a versehene Leiterplatte 16 vorhanden, die parallel zum Boden des Sockelteiles 1a angeordnet ist und mit einem am Schaltrad 7 angeordneten Schaltarm 7c kooperiert. Die Leiterplatte 16 umgibt dabei quasi konzentrisch über einen Bereich von etwa 120° den Durchbruch 6 derart, daß sie mit ihrem inneren Kreissektorrand 16' an die Schaltkurvenbahn 7a angrenzt. Auf der Leiterplatte 16 sind die dort vorhandenen Leiterbahnen 16a ebenfalls konzentrisch angeordnet und zwei auf dem Schaltarm 7c vorgesehenen, aus miteinander verbundenen Schleifkontaktteilen gebildeten Kontaktbrücken 7c*,7c** zugeordnet.

Die den beiden äußeren Leiterbahnen 16a zugeordnete Kontaktbrücke 7c* ist einerseits dafür vorgesehen, um in der Neutralstellung "N" die beiden als Referenzmittel dienenden Kontaktstellen 16a*,16** der äußersten Leiterbahn 16a zu überbrücken, wodurch ein akustisches und/oder optisches Signal generierbar ist, mit dem der Positionsschalter gegenüber dem Schaltgetriebe justiert und damit einfach am Getriebekasten in abgeglichener Art und Weise befestigt werden kann. Der Signalabgriff wird dabei einerseits über Masse "M" und andererseits über ein im Sockelteil 1a vorhandenes, nach außen geführtes Anschlußkontaktteil 16b** vorgenommen.
Andererseits ist die Kontaktbrücke 7c* dafür vorgesehen, um in der Parkstellung "P", in der sie von der elektrisch nicht angeschlossenen Leiterbahn 16a' auf die Leiterbahn 16a" übergeht, ein Signal am Anschluß "KL" zu erzeugen, über das ein der Einfachheit halber nicht dargestelltes Blockierorgan beeinflußt wird, mit dem z.B. die Freigabe des Abzugs des Zündschlüssels nur in der Parkstellung realisiert wird.

Die den restlichen vier Leiterbahnen 16a zugeordnete, ebenfalls aus miteinander verbundenen Schleifkontaktteilen gebildete Kontaktbrücke 7c** ist für weitere im einzelnen nicht erläuterte Steueraufgaben vorgesehen.
Ebenso sind weitere in der Zeichnung dargestellte Einzelheiten für das Verständnis der wesentlichen Kriterien ohne Belang, so daß auch hierauf nicht eingegangen wird.

Aufgrund des vorbeschriebenen Aufbaus der zwei Ausführungsformen ist einerseits ein in seiner Anwendung sehr flexibler Positionsschalter realisiert und andererseits eine sehr gute Recyclingfähigkeit desselben in einem sehr großen Umfang sichergestellt und zwar weil der Positionsschalter leicht demontierbar und die beteiligten Materialien hinsichtlich ihrer Anzahl auf ein Minimum beschränkt sind.

## Patentansprüche

1. Elektrischer Positionsschalter für automatische Schaltgetriebe von Kraftfahrzeugen, der ein relativ flach ausgebildetes, aus einem Sockelteil (1a) und einem Deckelteil (1b) zusammengesetztes, am Getriebekasten zu befestigendes Gehäuse (1) aufweist, in dem für den Anschluß von elektrischen Leitern vorgesehene Anschlußkontaktelemente vorhanden sind, die mit mehreren im Gehäuse angeordneten, jeweils aus einem Festkontaktteil (9a) und einem damit kooperierenden Schaltkontaktteil (9b) bestehenden Schaltkontaktsystemen verbunden sind, welche über ein drehbar im Gehäuse (1) gehaltenes, mit Schaltnocken versehenes Schaltrad (7) betätigbar sind, das mit einer in das Gehäuse (1) einführbaren, senkrecht zum Boden des Sockelteiles (1a) ausgerichteten, von dem in mehrere Positionen bringbaren Wahlhebel des Schaltgetriebes in entsprechende Lagen bewegbaren und damit Schaltstellungen realisierenden Schaltwelle der Schaltanordnung verbindbar ist,
**dadurch gekennzeichnet**, daß in mehreren parallel zum Boden des Sockelteiles (1a) liegenden Ebenen jeweils zumindest ein Schaltkontaktsystem (9a,9b) vorhanden ist, dessen Schaltkontaktteil (9b) über ein Ende (8a) von jeweils einem im Gehäuse (1) geführt gehaltenen, mit seinem anderen Ende (8b) einer mit den Schaltnocken (7b) versehenen, in der selben Ebene wie das zugehörige Schaltkontaktsystem befindlichen Schaltkurvenbahn (7a) des Schaltrades (7) zugeordneten Schaltstößel (8) betätigbar ist und daß dem Gehäuse (1) eine auf die Neutralstellung der Schaltanordnung abgestimmte Justiereinrichtung für einen Abgleich der Schaltstellungen des Positionsschalters auf die Position der Schaltwelle zugeordnet ist.

2. Elektrischer Positionsschalter nach Anspruch 1, dadurch gekennzeichnet, daß das Schaltrad (7) im Bereich seines der Schaltwelle zugeordneten Durchbruchs (6) auf einem Teil von dessen Umfang mit einer Vielkeilverzahnung (7*) und auf dem verbleibenden Teil von dessen Umfang mit Kodierelementen (7**) versehen ist, und daß die Justiereinrichtung aus einer eine Ausrichtung eines am Gehäuse (1) vorgesehenen, auf die Neutralstellung "N" sich beziehenden Referenzmittels (5,5' oder 16a*,16a**) auf eine zugeordnete Position der Schaltwelle realisierenden Baueinheit besteht und daß das Gehäuse (1) über zumindest ein daran vorhandenes Langloch in der abgeglichenen Stellung der Schaltanordnung am Getriebekasten festlegbar ist.

3. Elektrischer Positionsschalter nach Anspruch 2, dadurch gekennzeichnet, daß mit der Schaltwelle im Bereich des derselben zugeordneten Durchbruchs (6) eine die Baueinheit bildende mechanische Vorrichtung verbindbar ist, die in der abgeglichenen Stellung der Schaltanordnung mit dem aus einem am Sockelteil (1a) vorhandenen Fixierauge gebildeten Referenzmittel (5,5') korrespondiert.

4. Elektrischer Positionsschalter nach Anspruch 2, dadurch gekennzeichnet, daß mit der Schaltwelle eine an dem auf der Schaltwelle befestigten Schaltrad (7) vorhandene elektrische Kontaktbrücke (7c*) verbunden ist, die in der abgeglichenen Stellung der Schaltanordnung mit dem aus zwei der Neutralstellung "N" zugeordneten Kontaktstellen gebildeten Referenzmittel (16a*,16a**) korrespondiert.

5. Elektrischer Positionsschalter nach Anspruch 4, dadurch gekennzeichnet, daß die beiden Kontaktstellen aus sich überlappenden Endzonen von zwei auf einer am Sockelteil (1a) parallel zum Boden desselben gehaltenen Leiterplatte (16) befindlichen Leiterbahnen (16a) bestehen und die Kontaktbrücke (7c*) aus am Schaltrad (7) befindlichen, aus zwei miteinander verbundenen, den beiden Leiterbahnen (16a) zugeordneten Schleifkontaktteilen hergestellt ist.

6. Elektrischer Positionsschalter nach Anspruch 5, dadurch gekennzeichnet, daß die Leiterplatte (16) quasi konzentrisch den für die Schaltwelle vorgesehene Durchbruch (6) über einen Bereich von > 90° bis < 180° umgibt.

7. Elektrischer Positionsschalter nach Anspruch 6, dadurch gekennzeichnet, daß auf der Leiterplatte (16) mehrere hinter- und/oder nebeneinander vorgesehene, konzentrisch zu dem für die Schaltwelle vorgesehenen Durchbruch (6) angeordnete, mehreren Steuerstromkreisen zugeordnete Leiterbahnen (16a) vorhanden sind.

8. Elektrischer Positionsschalter nach einem der Ansprüche 6 oder 7, dadurch gekennzeichnet, daß eine Leiterbahn (16a) derart auf der Leiterplatte (16) angeordnet und einer weiteren Leiterbahn (16a) über eine zugehörige Kontaktbrücke (7c*) so zugeordnet ist, daß nur in der sogenannten Parkstellung "P" ein Freigabesignal für ein einem Steuerstromkreis zugehöriges Blockierorgan initiiert wird.

9. Elektrischer Positionsschalter nach Anspruch 1, dadurch gekennzeichnet, daß die Schaltstößel (8) mit Justiermitteln (8a',8a") für die Einstellung des Abstandes zwischen den miteinander kooperierenden Kontaktbelägen (15a,15b) der Festkontaktteile (9a) und der Schaltkontaktteile (9b) versehen sind.

10. Elektrischer Positionsschalter nach Anspruch 9, dadurch gekennzeichnet, daß die Schaltstößel (8) an ihrem dem jeweils zugehörigen Schaltkontaktteil (9b) zugeordneten Ende (8a) mit einer Ausnehmung (8a') versehen sind, in der ein sich am Schaltkontaktteil abstützendes Bauelement (8a") unter Preßpassung gehalten wird.

11. Elektrischer Positionsschalter nach Anspruch 10, dadurch gekennzeichnet, daß die Ausnehmung (8a') als Sackloch-Bohrung ausgeführt ist und daß das Bauelement (8a'') aus einer geringfügig übermaßig ausgebildeten Kugel besteht.

12. Elektrischer Positionsschalter nach Anspruch 1, dadurch gekennzeichnet, daß den mit den freien Enden (9b') der Schaltkontaktteile (9b) kooperierenden Enden (9a') der Festkontaktteile (9a) Justierorgane zur Einstellung des zum jeweils zugehörigen Schaltkontaktteil in der Ausschaltstellung bestehenden Kontaktabstandes zugeordnet sind.

13. Elektrischer Positionsschalter nach Anspruch 12, dadurch gekennzeichnet, daß die Justierorgane aus dem Sockelteil (1a) zugeordneten, über in Gewindebohrungen (14) verstellbar gehaltenen Einstellschrauben bestehen.

14. Elektrischer Positionsschalter nach einem der Ansprüche 1 bis 13, dadurch gekennzeichnet, daß die freien Enden (9b') der Schaltkontaktteile (9b) unter Vorspannung dem jeweils zugehörigen Schaltstößel (8) zugeordnet sind.

15. Elektrischer Positionsschalter nach einem der Ansprüche 1 bis 14, dadurch gekennzeichnet, daß in mehr als zwei parallel zum Boden des Sockelteiles (1a) liegenden Ebenen Schaltkontaktsysteme (9a,9b) vorhanden sind und daß die jeweils zu beiden Seiten der Schaltkontaktsysteme befindlichen Anschlußkontaktelemente (13) in jeweils einem am Sockelteil festgelegten Tragekörper (11) zusammengefaßt sind.

16. Elektrischer Positionsschalter nach Anspruch 15, dadurch gekennzeichnet, daß die Tragekörper (11) an einer gemeinsamen mit dem Sockelteil (1a) verbundenen Haltevorrichtung (10) gehalten sind, der auch die Schaltkontaktsysteme (9a,9b) zugeordnet sind.

17. Elektrischer Positionsschalter nach Anspruch 1 oder einem der folgenden, dadurch gekennzeichnet, daß in mehr als zwei parallel zum Boden des Sockelteils (1a) liegenden Ebenen Schaltkontaktsystemen (9a,9b) vorhanden sind und daß die jeweils zu beiden Seiten der Schaltkontaktsysteme befindlichen Anschlußkontaktelemente (13) in einem gemeinsamen Träger zusammengefaßt sind, dem auch die Schaltkontaktsysteme zugeordnet sind.

18. Elektrischer Positionsschalter nach Anspruch 1 oder einem der folgenden, dadurch gekennzeichnet, daß an den Anschlußkontaktelementen (13) die zugehörigen elektrischen Leiter (12) durch Schneid-Klemm-Technik festlegbar sind.

19. Elektrischer Positionsschalter nach Anspruch 1 oder einem der folgenden, dadurch gekennzeichnet, daß das Sockelteil (1a) des Gehäuses (1) aus Kunststoff und das Deckelteil (1b) desselben aus Metall besteht.

20. Elektrischer Positionsschalter nach Anspruch 19, dadurch gekennzeichnet, daß das Sockelteil (1a) aus Polyätherimid und das Deckelteil (1b) aus Aluminium besteht.

21. Elektrischer Positionsschalter nach Anspruch 1 oder einem der folgenden, dadurch gekennzeichnet, daß an dem Sockelteil (1a) ein mit einem Dichtmittel versehener Stutzen (1a') zur Einführung und dichten Halterung der elektrischen Leiter (12) vorhanden ist.

22. Elektrischer Positionsschalter nach Anspruch 1 oder einem der folgenden, dadurch gekennzeichnet, daß an dem Sockelteil (1a) ein in einer Nut (2) desselben umlaufender, am Rand des Deckelteils (1b) zur Anlage kommender Dichtring (3) vorgesehen ist.

## Claims

1. Electrical position switch for automatic vehicle gearboxes, which exhibits a housing (1) in a relatively flat form consisting of a base part (1a) and a cover part (1b) to be fixed on the gear casing, in which connector contact elements are present for the connection of electrical conductors, which are connected with several switching contact systems arranged in the housing, each consisting of a fixed contact part (9a) and a cooperating switching contact part (9b), the switching contact systems being operable by means of a switching wheel (7) held in a rotatable fashion in the housing (1) and provided with switching cams, the switching wheel being capable of connection to a selector shaft belonging to the switching arrangement which is oriented in a perpendicular manner in relation to the floor of the base part (1a) and which can be moved by the selector lever of the gearbox into positions corresponding to those taken by the selector lever and implementing switching positions,
**characterised in that**, in several layers lying parallel to the floor of the base part (1a) at least one switching contact system (9a,9b) is provided in each layer, whose switching contact part (9b) can be operated by means of one end (8a) of a switching plunger (8) which is held in a guided manner in housing (1), the other end (8b) being assigned to a switching camform (7a) of the switching wheel (7) which is provided with switching cams (7b) and which is located in the same layer as the relevant switching contact system and that an adjustment device tuned to the neutral position of the switching arrangement is assigned to the housing (1) for the purpose of tuning the switching positions of the position switch to the position of the selector shaft.

2. Electrical position switch according to Claim 1, characterised in that the switching wheel (7) is provided in the area of its opening which is associated with the selector shaft with multi-wedge teeth (7*) in one section of the opening and with coding elements (7**) in the remaining section, and that the adjustment device consists of an assembly unit which implements the adjustment of a reference means (5,5' or 16a*, 16a**) provided on housing (1) relating to the neutral position "N" to an allocated position of the selector shaft and that the housing (1), by means of at least one elongated hole provided on it, can be fixed to the gear casing in the adjusted position of the switching arrangement.

3. Electrical position switch according to Claim 2, characterised in that a mechanical device which forms the assembly unit can be connected with the selector shaft in the region of the opening (6) assigned to the same, which in the adjusted position of the switching arrangement corresponds with the reference means (5,5') consisting of a fixing eyelet provided on base part (1a).

4. Electrical position switch according to Claim 2, characterised in that an electrical bridge contact (7c*) provided on the switching wheel (7) fixed to the selector shaft is connected to the selector shaft, the bridge contact, in the adjusted position of the switching arrangement, cooperating with the reference means (16a*, 16a**) formed of two contact points allocated to neutral position "N".

5. Electrical position switch according to Claim 4, characterised in that the two contact points consist of the overlapping end areas of two conductor tracks located on a printed circuit board (16) held parallel to the floor of the base part (1a) and the bridge contact (7c*) is created from wiper contact parts which are located on the switching wheel (7), two contact parts being connected to one another, and which are assigned to the two conductive tracks (16a).

6. Electrical position switch according to Claim 5, characterised in that the printed circuit board (16) surrounds the opening (6) provided for the selector shaft in a quasi-concentric fashion over a range of > 90° to < 180°.

7. Electrical position switch according to Claim 6, characterised in that several conductive tracks (16a) lying behind and/or next to one another are provided on the printed circuit board (16), the conductive tracks being arranged concentrically in relation to the opening (6) provided for the selector shaft and being assigned to several control current circuits.

8. Electrical position switch according to either of Claims 6 or 7, characterised in that one conductive track (16a) is arranged on the printed circuit board (16) and a further conductive track (16a) is allocated by means of an associated bridge contact (7c*) in such a way, that only in the so-called park position "P" a release signal for an inhibiting member belonging to a control current circuit is initiated.

9. Electrical position switch according to Claim 1, characterised in that the switching plungers (8) are provided with adjustment means (8a', 8a") for the adjustment of the distance between the cooperating contact coatings (15a,15b) of the fixed contact parts (9a) and the switching contact parts (9b).

10. Electrical position switch according to Claim 9, characterised in that the switching plungers (8) are each provided with an opening (8a') at their ends (8a) associated with the relevant switching contact part (9b) into which a component (8a") supported on the switching contact part is held by means of a press fit.

11. Electrical position switch according to Claim 10, characterised in that the opening (8a') is in the form of a blind hole and that the component (8a") consists of a slightly overdimensioned ball.

12. Electrical position switch according to Claim 1, characterised in that adjustment members are allocated to the ends (9a') of the fixed contact parts (9a) which cooperate with the free ends (9b') of the switching contact parts for the adjustment of the distance to the relevant switching contact part in the on position.

13. Electrical position switch according to Claim 12, characterised in that the adjustment members consists of adjustment screws which are associated with the base part (1a) and held adjustably in threaded borings (14).

14. Electrical position switch according to any of Claims 1 to 13, characterised in that the free ends (9b) of switching contact parts (9b) are allocated to the relevant switching plungers (8) in a pretensioned fashion.

15. Electrical position switch according to any of Claims 1 to 14, characterised in that switching contact systems (9a,9b) are present in more than two layers lying parallel to the floor of the base part (1a) and that the connector contact elements (13) located on both sides of the switching contact systems are combined in each case in a carrier body (11) fixed to the base part.

16. Electrical position switch according to Claim 15, characterised in that the carrier bodies (11) are held on a holder device (10) which is also connected with the base part (1a), to which the switching contact systems (9a,9b) are also allocated.

17. Electrical position switch according to Claim 1 or one of the following, characterised in that switching contact systems (9a,9b) are present in more than two layers lying parallel to the floor of the base part (1a) and that the connector contact elements (13) located on both sides of the switching contact systems are combined in a common holder to which also the switching contact systems are allocated.

18. Electrical position switch according to Claim 1 or one of the following, characterised in that the electrical conductors (12) are connectable to the relevant connector contact elements (13) by means of insulation displacement technology.

19. Electrical position switch according to Claim 1 or one of the following, characterised in that the base part (1a) of housing (1) consists of plastic and the lid part (1b) of the same consists of metal.

20. Electrical position switch according to Claim 19, characterised in that the base part (1a) consists of polyetherimide and the lid part (1b) consists of aluminium.

21. Electrical position switch according to Claim 1 or one of the following, characterised in that a support (1a') provided with a sealing means is provided on the base part (1a) for the insertion and sealed accommodation of the electrical conductors (12).

22. Electrical position switch according to Claim 1 or one of the following, characterised in that a sealing ring is provided on base part (1a) the sealing ring running round base part (1a) in a groove provided in same and cooperating with the edge of cover part (1b).

## Revendications

1. Commutateur de position électrique pour boîtes de vitesses automatiques de véhicules automobiles présentant un boîtier (1) relativement plat, composé d'un socle (1a) et d'un couvercle (1b), appelé à être fixé à la boîte d'engrenage et dans lequel, aux fins de raccordement de conducteurs électriques, des éléments de contact de raccordement sont prévus, lesquels sont reliés à des systèmes de contact de commutation disposés dans le boîtier et formés chacun d'un élément de contact fixe (9a) et d'un élément de contact de commutation (9b) coopérant ensemble, ces système de contact de commutation pouvant être actionnés par l'intermédiaire d'une roue à cliquet (7) logée, rotative, dans le boîtier et pourvue d'ergots, laquelle peut être reliée à un arbre de commande du circuit de commutation qui peut être introduit dans le boîtier (1), perpendiculairement au fond du socle (1a), mû dans des positions adéquates par le levier de sélection déplaçable selon plusieurs position, et réalisant ainsi la commutation des positions,
caractérisé en ce que,
sur chacun de plusieurs plans parallèles au fond du socle (1a), au moins un système de contact de commutation (9a, 9b) est prévu dont l'élément de contact de commutation (9b) est actionnable par l'intermédiaire d'une extrémité (8a) d'une tige-poussoir (8) conduite dans le boîtier (1) et dont l'autre extrémité (8b) est coordonnée à une voie de commutation (8) courbée (7a) de la roue à cliquet, située au même niveau que le système de contact de commutation correspondant et pourvue d'ergots (7b),
et qu'un dispositif d'ajustage, accordé à la position neutre du circuit de commutation et assurant le réglage des positions de commutation par rapport à l'arbre de commande, est coordonné au boîtier (1).

2. Commutateur de position électrique selon la revendication 1,
caractérisé en ce que
la roue à cliquet (7) est pourvue, dans la zone de sa percée (6) affecté à l'arbre de commande, d'une denture à cales multiples (7*) disposée sur une partie du pourtour de la percée et d'éléments de codage (7**) disposés sur la partie restante du pourtour de la percée
et que le dispositif d'ajustage consiste en une unité modulaire qui oriente, sur une position correspondante de l'arbre de commande, un auxiliaire de référence (5, 5' ou 16a*, 16a**) équipant le boîtier (1) et se rapportant à la position neutre "N"
et que le boîtier (1) peut être fixé, dans la position en balance du circuit de commutation, à la boîte d'engrenage à l'aide d'au moins un trou oblong dont elle est pourvue.

3. Commutateur de position électrique selon la revendication 2,
caractérisé en ce que
un dispositif mécanique formant une unité modulaire peut être raccordé à l'arbre de commande dans la zone de la percée (6) y afférente, ce dispositif mécanique correspondant, dans la position en balance du circuit de commutation, à l'auxiliaire de référence (5, 5') formé par un oeillet de fixation équipant le socle (1a).

4. Commutateur de position électrique selon la revendication 2,
caractérisé en ce qu'
un pont de contact électrique(7c*, équipant la roue à cliquet (7) fixée sur l'arbre de commande, est relié à l'arbre de commande, ce pont de contact (7c*) correspondant à l'auxiliaire de référence (16a*, 16a**) formé par deux points de contact coordonnés à la position neutre "N", le circuit de commutationn étant en balance,

5. Commutateur de position électrique selon la revendication 4,
caractérisé en ce que
les deux points de contact sont formés par les zones d'extrémité de deux voies conductibles (16a) d'une plaque à circuit imprimé (16) fixée au socle (la) parallèment au fond de celui-ci, ces zones d'extrémité se chevauchant, et que le pont de contact (7c*) est formé par deux contacts glissants équipant la roue à cliquet (7) et reliés ensemble, lesquels sont coordonnés aux deux pistes conductibles (16a).

6. Commutateur de positions électrique selon la revendication 5,
caractérisé en ce que
la plaque à circuit imprimé (16) entoure, presque concentriquement, sur une zone de > 90° à < 180°, la percée (6) prévue pour l'arbre de commande.

7. Commutateur de position électrique selon la revendication 6,
caractérisé en ce que
plusieurs pistes conductibles (16a), placées les unes derrière et/ou à côté des autres, concentriquement par rapport à la percée (6) accueillant l'arbre de commande, et coordonnées à plusieurs circuits de commande, sont disposées sur une plaque à circuit imprimé (16).

8. Commutateur de position électrique selon l'une des revendications 6 ou 7,
caractérisé en ce que
une piste conductible (16a) est disposée sur une plaque à circuit imprimé (16) et coordonnée à une autre piste conductible (16a) par l'intermédiaire d'un pont de contact correspondant (7c*) de sorte qu'un signal de libération ne puisse être initialisé qu'en position dite de parking "P" à l'intention d'un organe de blocage afférent à un circuit de commande.

9. Commutateur de position électrique selon la revendication 1,
caractérisé en ce que
les tiges-poussoirs (8) sont équipées d'auxiliaires d'ajustage (8a', 8a") servant au réglage de l'intervalle entre les revêtements de contact (15a, 15b) des éléments de contact fixes (9a) et des éléments de contact de commutation (9b) coopérant ensemble.

10. Commutateur de position électrique selon la revendication 9,
caractérisé en ce que
les extrémités (8a) des tiges-poussoirs (8), coordonnées, respectivement, à l'élément de contact de commutation (9b) correspondant, sont pourvues d'une cavité (8a') dans laquelle un élément de construction (8a"), prenant appui contre l'élément de contact de commutation, est maintenu par ajustage serré.

11. Commutateur de position électrique selon la revendication 10,
caractérisé en ce que
la cavité (8a') est conçue en forme de trou borgne
et que l'élément de construction (8a'`) consiste en une bille minimalement surdimensionnée.

12. Commutateur de position électrique selon la revendication 1,
caractérisé en ce que
des organes d'ajustage sont coordonnés aux extrémités (9a') des éléments de contact fixes (9a) coopérant avec les extrémités libres (9b') des éléments de contact de commuation (9b), lesquels organes d'ajustage règlent l'intervalle existant, en position déconnectée, par rapport à l'élément de contact de commuation correspondant.

13. Commutateur de position électrique selon la revendication 12,
caractérisé en ce que
les organes d'ajustage consistent en vis de réglage, coordonnées au socle (1a) et réglables dans des trous filetés (14).

14. Commutateur de position électrique selon l'une des revendications 1 à 13,
caractérisé en ce que
les extrémités libres (9b') des éléments de contact de commutation (9b) sont coordonnées respectivement, sous précontrainte, à la tige-poussoir (8) correspondante.

15. Commutateur de position électrique selon l'une des revendications 1 à 14,
caractérisé en ce que
sur plus de deux plans parallèles au fond du socle (1a), des systèmes de contact de commutation (9a, 9b) sont prévus
et que les éléments de contact de raccordement (13), situés des deux côtés des systèmes de contact de commutation sont disposés respectivement dans un corps porteur (11) fixé au socle (1a).

16. Commutateur de position électrique selon la revendication 15,
caractérisé en ce que
les corps porteurs (11) sont maintenus sur un support (10) commun relié au socle (1a), les systèmes de contact de commutation (9a, 9b) étant également coordonnés à ce support.

17. Commutateur de position électrique selon la revendication 1 ou l'une des revendications suivantes,
caractérisé en ce que,
sur plus de deux plans parallèles au fond du socle (1a), des systèmes de contact de commutation (9a, 9b) sont prévus
et que les éléments de contact de raccordement (13), situés des deux côtés des systèmes de contact de commutation sont disposés dans un support commun auquel les systèmes de contact de commutation sont également coordonnés.

18. Commutateur de position électrique selon la revendication 1 ou l'une des revendications suivantes,
caractérisé en ce que
les conducteurs électriques (12) peuvent être fixés aux éléments de contact de commutation correspondants par application de la technique de raccord par déplacement d'isolation.

19. Commutateur de position électrique selon la revendication 1 ou l'une des revendications suivantes,
caractérisé en ce que
que le socle (1a) du boîtier (1) est en matière plastique et son couvercle (1b) en métal

20. Commutateur de position électrique selon la revendication 19,
caractérisé en ce que
le socle (1a) est exécuté en polyétherimide et le couvercle (1b) en aluminium.

21. Commutateur de position électrique selon la revendication 1 ou l'une des revendications suivantes,
caractérisé en ce que
le socle (1a) est pourvu d'une tubulure (1a') avec d'un joint d'étanchéité, dans laquelle les conducteurs (12) sont introduits et maintenus de façon étanche.

22. Commutateur de position électrique selon la revendication 1 ou l'une des revendications suivantes,
caractérisé en ce que
le socle (1a) est pourvu d'un anneau d'étanchéité (3), inséré dans une rainure (2) s'étendant sur tout son pourtour et venant s'appuyer contre le bord du couvercle (1b).
